# EUROPÄISCHE PATENTSCHRIFT

(11) **EP 3 110 364 B1**
(45) Veröffentlichungstag und Bekanntmachung des Hinweises auf die Patenterteilung: **23.10.2019**
(21) Anmeldenummer: 15703493.5
(22) Anmeldetag: 26.01.2015
(51) Int. Cl.: A61C 3/02

(54) **DENTALINSTRUMENT**
DENTAL INSTRUMENT
INSTRUMENT DENTAIRE

(30) Priorität: 26.02.2014 DE 102014203451
(43) Veröffentlichungstag der Anmeldung: 04.01.2017
(73) Patentinhaber: Gebr. Brasseler GmbH & Co. KG, 32657 Lemgo (DE)
(72) Erfinder: DANGER, Karl-Heinz, 32758 Detmold (DE)
(74) Vertreter: Hoefer & Partner Patentanwälte mbB
(86) Internationale Anmeldenummer: PCT/EP2015/051497
(87) Internationale Veröffentlichungsnummer: WO 2015/128138

(56) Entgegenhaltungen:
- WO-A1-99/08617
- DE-A1-102007 016 600
- DE-A1-102010 010 589
- JP-A- 2009 034 310
- US-A1- 2007 248 935
- US-A1- 2009 053 674

## Beschreibung

Die Erfindung bezieht sich auf ein Dentalinstrument mit einem Schaft und einem mit diesem verbundenen, mit Schneiden versehenen Kopf.

Dentalinstrumente der beschriebenen Art sind in unterschiedlichsten Ausgestaltungsvarianten vorbekannt. Eine klassische Ausgestaltungsvariante ist ein sog. Rosenbohrer, der zur Entfernung von kariösem Gewebe geeignet ist.

Bei Dentalinstrumenten ist es wünschenswert, dass das Instrument eine vibrationsarme Bearbeitung ermöglicht und dass zugleich eine hohe Abtragsleistung gewährleistet ist. Dies ist bei den aus dem Stand der Technik bekannten Instrumenten nicht immer der Fall.

Aus der DE 10 2007 016 600 A1 ist ein Fissurenbohrer vorbekannt, welcher einen abgerundeten, kegelförmigen Kopf aufweist, welcher mit achsparallelen, gerade Schneiden versehen ist, wobei einzelne Schneiden eine unterbrochene Schneidenkontur aufweisen.

Die US 2009/053674 A1 zeigt einen Dentalfräser, bei welchem die sich im Wesentlichen achsparallel erstreckenden Schneiden gezackt ausgebildet sind.

Aus der US2007/0248935 ist ein Rosenbohrer mit Schneidkanten bekannt, bei dem jede der Schneidkanten eine Vertiefung aufweist.

Der Erfindung liegt die Aufgabe zugrunde, ein Dentalinstrument der eingangs genannten Art zu schaffen, welches bei einfachem Aufbau und einfacher, kostengünstiger Herstellbarkeit eine vibrationsfreie Anwendung gestattet und eine hohe Abtragsleistung aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass um den Umfang des Kopfes glatte Schneiden und Schneiden mit einer unterbrochenen Schneidenkontur ausgebildet sind. Bei dem erfindungsgemäßen Instrument ist somit vorgesehen, dass glatte, in üblicher Weise ausgestaltete Schneiden sich mit Schneiden abwechseln, deren Schneidenkontur nicht in

Form einer glatten, stetig verlaufenden Schneide ausgebildet ist. Derartige Schneiden mit unterbrochener Schneidenkontur sind erfindungsgemäß in Form eines Wellenschliffs ausgebildet. Derartige Wellenschliffe sind aus dem Bereich von Messern vorbekannt. Dabei stehen einzelne Bereiche der Schneidenkontur bei dem erfindungsgemäßen Dentalinstrument radial weiter vor, als andere Schneiden. Bei einer Kontaktierung einer zu bearbeitenden Oberfläche werden somit zunächst die vorstehenden Bereiche der Schneidenkontur in Eingriff gebracht. Bei einer Rotation des Instruments gelangt dann eine nachfolgende glatte Schneide in Schneideingriff. Auf diese Weise ist es möglich, mittels der Schneiden mit unterbrochener Schneidenkontur zunächst kleinere Partikel abzutragen. Mit der folgenden glatten Schneide ist es dann möglich, die Oberfläche, die durch die unterbrochene Schneidenkontur in unregelmäßigen Bereichen bearbeitet wurde, zu glätten, um zugleich die abzutragenden Materialien zu teilen, so dass diese problemlos aus den Schneidenzwischenräumen entfernt werden können.

Durch die erfindungsgemäß vorgesehene Ausgestaltung ergibt sich eine erhebliche Verringerung der auftretenden Vibrationen. Es ist ein fast vibrationsfreier Bearbeitungsvorgang möglich.

Dabei sind sowohl die vorspringenden, als auch die rückspringenden Bereiche der Schneidenkontur scharf und schneidend.

Besonders günstig ist es, wenn alternierend um den Umfang des Kopfes glatte Schneiden und Schneiden mit einer unterbrochenen Schneidenkontur ausgebildet sind. Es ist jedoch alternativ auch möglich, um den Umfang des Kopfes alternierend Gruppen von glatten Schneiden und Gruppen von Schneiden mit unterbrochener Schneidenkontur vorzusehen.

Um eine vibrationsarme Bearbeitung mit hoher Abtragsleistung zu realisieren, kann es günstig sein, wenn die glatten Schneiden und die Schneiden mit unterbrochener Schneidenkontur jeweils in einer zur Rotationsachse des Kopfes rechtwinkligen Ebene unterschiedliche Radien aufweisen. Es ist jedoch auch möglich, gleiche Radien vorzusehen. In einer weiteren, bevorzugten Ausgestaltung der Erfindung ist vorgesehen, dass die Schneiden mit der unterbrochenen Schneidenkontur über ihre axiale Länge gleich ausgebildet sind oder dass sich die unterbrochene Schneidenkontur über die axiale Länge des Kopfes ändert. Dabei ist es beispielsweise möglich, einzelne der Schneiden mit unterbrochener Schneidenkontur mit einer gröberen Unterteilung oder Ausgestaltung vorzusehen, als andere Schneiden am Kopf, die eine feinere Schneidenkontur haben können. Bei der Ausgestaltung als Wellenschliff ist es beispielsweise möglich, den Radius des Wellenschliffes zu variieren, so dass die einzelnen Schneiden mit dem Wellenschliff, die am Umfang des Kopfes angeordnet sind, einen unterschiedlichen Wellenschliff aufweisen. Alternativ oder ergänzend ist es auch möglich, beispielsweise im vorderen, distalen Bereich des Instruments die Schneidenkontur mit dem Wellenschliff feiner auszubilden und somit den Abstand der einzelnen "Wellen" geringer zu wählen, als an dem Bereich des Kopfes, der dem Schaft zugewandt ist.

In günstiger Ausgestaltung der Erfindung weist das Dentalinstrument, welches als Rosenbohrer ausgebildet ist, beispielsweise vier, sechs oder acht Schneiden auf. Dabei ist es besonders vorteilhaft, wenn zwei dieser Schneiden am stirnseitigen, distalen Ende des Bohrers in einer Querschneide zusammenlaufen, so dass das erfindungsgemäße Instrument auch in axialer Richtung eine hohe Abtragsleistung aufweist.

Eine weitere Ausgestaltungsmöglichkeit besteht darin, die Schneiden in sogenannten Gruppen anzuordnen. Dazu wären mindestens zwei Gruppen mit mindestens einem Zahn (in oben beschriebener Ausführung) notwendig. Vorteilhaft wären insbesondere drei oder mehr Gruppen.

Die Herstellung des erfindungsgemäßen Dentalinstruments erfolgt bevorzugterweise entweder mittels eines additiven Herstellungsverfahrens oder eines abtragenden Laserverfahrens. Bei dem abtragenden Laserverfahren kann, abgesehen von dem Schaft, insbesondere der Kopf mittels des Laserverfahrens aus einem Halbzeug oder einem Rohling gefertigt werden. Dabei ist insbesondere der Einsatz eines Kurzpuls-Lasers oder eines Ultrakurzpuls-Lasers vorteilhaft. Mittels derartiger Laser können kleinste Materialvolumina verdampft werden, ohne dass das Gefüge des restlichen Werkstückes in Mitleidenschaft gezogen oder verändert wird. Bei einem additiven Verfahren ist es möglich, ein DLD-Verfahren (Direct Laser Depositioning) oder ein Elektronenstrahlauftragsschweißverfahren zu verwenden. Auch ein selektives Laser-Sinterverfahren ist beispielsweise möglich. Derartige Verfahren sind zeitsparend und kostengünstig einsetzbar und ermöglichen Geometrien des erfindungsgemäßen Kopfes des Dentalinstruments, welche durch klassische Schleif- oder Fräsverfahren nicht herstellbar sind.

Das erfindungsgemäße Dentalinstrument kann beispielsweise aus Stahl, Hartmetall oder Keramik gefertigt werden.

Im Folgenden wird die Erfindung anhand von Ausführungsbeispielen in Verbindung mit der Zeichnung beschrieben. Dabei zeigt:

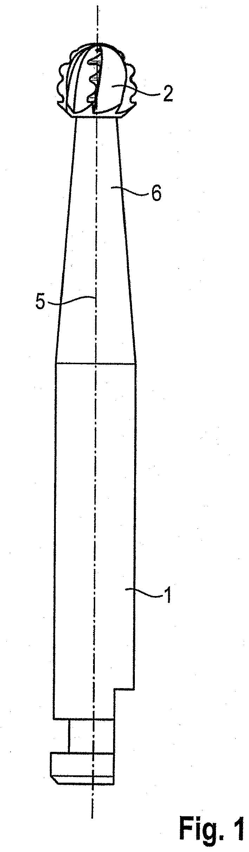

- Fig. 1: eine vereinfachte Seitenansicht eines ersten Ausführungsbeispiels eines erfindungsgemäßen Dentalinstruments,
- Fig. 2: eine vergrößerte Ansicht des in Fig. 1 gezeigten Kopfes,
- Fig. 3: eine vergrößerte Stirnansicht des Kopfes,
- Fig. 4: eine Radial-Schnittansicht des in den Fig. 2 und 3 gezeigten Kopfes,
- Fig. 5: eine Schnittansicht, analog Fig. 4, eines weiteren Ausführungsbeispiels der Erfindung,
- Fig. 6: eine schematische Darstellung, in Seitenansicht, des in Fig. 5 gezeigten Ausführungsbeispiels,
- Fig. 7: ein Schliffbild des typischen Gefüges von gezogenem Stahl mit anschließender Wärmebehandlung, und
- Fig. 8: ein Schliffbild eines durch ein additives Laseraufschmelzverfahren erzeugten Werkstoffs.

Das erfindungsgemäße Dentalinstrument umfasst einen Schaft 1, der in üblicher Weise dimensioniert und mit Einspann- und Kraftübertragungsmitteln versehen ist. Der Schaft 1 ist um eine zentrische Rotationsachse 5 drehbar. An dem Schaft 1 schließt sich ein Hals 6 an, an welchem ein Kopf 2 ausgebildet ist.

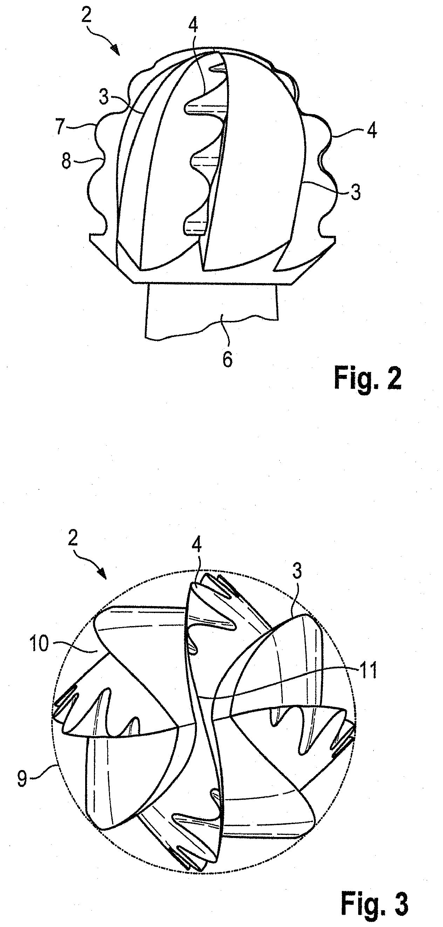

Wie sich insbesondere aus den Fig. 2 und 3 ersehen lässt, weist der Kopf um den Umfang verteilt eine Abfolge von glatten Schneiden 3 und Schneiden 4 mit unterbrochener Schneidenkontur auf. Unter dem Begriff "glatte Schneide" ist erfindungsgemäß eine Schneide zu verstehen, die nicht unterbrochen ist und stetig verläuft.

Die Schneiden 4 mit unterbrochener Schneidenkontur sind bei dem gezeigten Ausführungsbeispiel in Form eines Wellenschliffs ausgebildet. Die Wellenkontur oder der Wellenschliff weist vorstehende Schneidenbereiche 7 und rückversetzte Schneidenbereiche 8 auf. Diese sind durchgängig scharf und schneidend, so dass sowohl die vorstehenden Schneidenbereiche 7 als auch die rückversetzten Schneidenbereiche 8 insbesondere bei einer radialen (bezogen auf die Rotationsachse 5) Bewegung des Kopfes 2 ein Materialabtrag erfolgt. Bei einer Rotation des Kopfes 2 folgt auf eine Schneide 4 mit unterbrochener Schneidenkontur eine glatte Schneide 3, so wie dies insbesondere aus der Darstellung der Fig. 3 ersichtlich ist.

Die Fig. 3 zeigt ein Ausführungsbeispiel mit insgesamt acht Schneiden, wobei vier glatte Schneiden 3 und vier Schneiden 4 mit unterbrochener Schneidenkontur alternierend vorgesehen sind. Der zwischen den Schneiden ausgebildete Spanraum ist mit dem Bezugszeichen 10 versehen. Weiterhin zeigt die Fig. 3, dass zumindest zwei der Schneiden 4 mit unterbrochener Schneidenkontur stirnseitig zusammenlaufen und eine Querschneide 11 bilden.

Die Fig. 3 zeigt eine Hüllkurve 9, welches sich bei Rotation des Instruments in der jeweiligen Radialschnittebene durch die Außenkanten der Schneiden 3, 4 ergibt. Die Hüllkurve 9 gemäß Fig. 3 ist kreisförmig ausgebildet. Hieraus ist zu ersehen, dass bei dem gezeigten Ausführungsbeispiel die jeweiligen Radien der glatten Schneiden 3 und der vorstehenden Schneidenbereiche 7 der Schneiden 4 mit unterbrochener Schneidenkontur denselben Radius aufweisen.

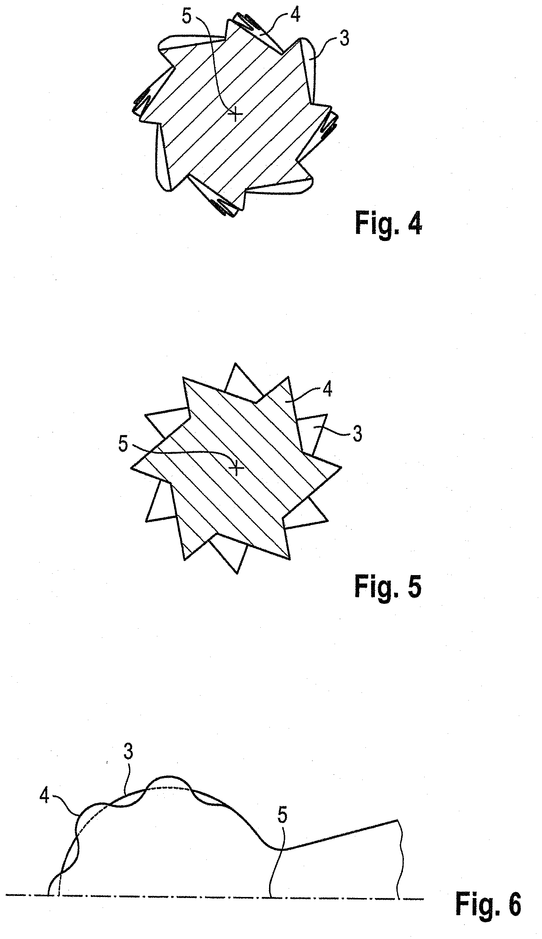

Die Fig. 4 zeigt eine Radial-Schnittansicht des Ausführungsbeispiels der Fig. 2 und 3. Daraus ist ersichtlich, dass die Zähne alle die gleichen Zahnhöhen und somit den gleichen Radius aufweisen. Alle Zähne schneiden somit mit ihren aus dem Wellenschliff erhabenen Bereichen gleichmäßig am Umfang.

Die Fig. 5 und 6 zeigen eine weitere Ausgestaltungsvariante, bei welcher alternierend unterschiedliche Zähne vorgesehen sind. Dabei weisen die Zähne 4 mit der unterbrochenen Schneidenkontur (Wellenschliff) einen größeren Durchmesser oder Radius auf, als die glatten Schneiden 3. Dies ist insbesondere in Fig. 6 verdeutlicht. Die Schneiden 4 mit dem Wellenschliff arbeiten während des Schnittvorganges spanend vor, während die glatten Schneiden 3 in Form eines Schlichtvorgangs nacharbeiten.

Eine derartige Ausgestaltung der Schneiden ist nicht nur für klassische Rosenbohrer geeignet, sondern auch für Fräser, die bevorzugt in der Zahntechnik zum Einsatz kommen.

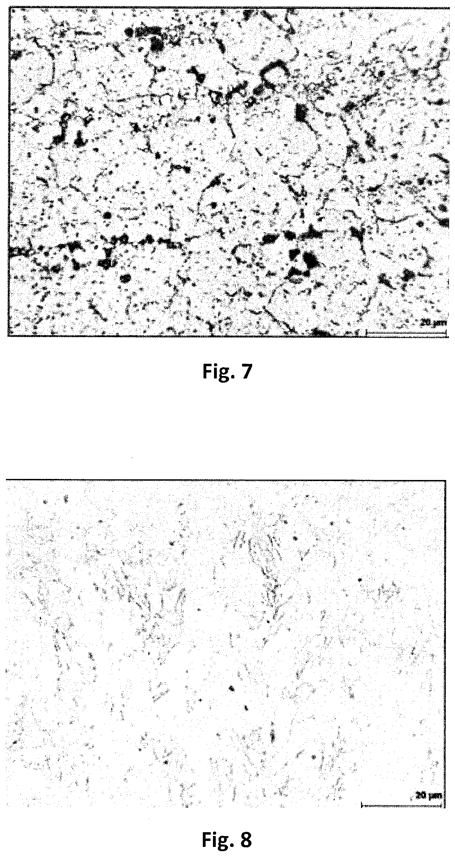

Die Figuren 7 und 8 stellen Schliffbilder dar, aus denen sich ein Vergleich zwischen einem herkömmlich erzeugten Werkstoff und einem mittels eines additiven Verfahrens erzeugten Werkstoff ergibt.

Bei dem in Figur 7 gezeigten Schliffbild handelt es sich um einen konventionell hergestellten Werkstoff, welcher das typische Gefüge eines gezogenen Stahls mit anschließender Wärmebehandlung aufweist. Dabei sind deutlich die längs angeordneten Karbide in der martensitischen Grundmasse zu erkennen.

Im Gegensatz hierzu zeigt die Figur 8 einen Schliff eines mittels eines additiven Laseraufschmelzverfahrens erzeugten Werkstoffs. Dabei ist in der Gefügeansicht deutlich ein grobes, martensitisches Gefüge mit feinen Karbidausscheidungen zu erkennen, welche keine besondere Anordnung aufweisen. Als vorteilhaft erweist es sich bei additiv hergestellten Werkstücken, dass diese keine Härterisse bilden, so wie dies bei konventionell erzeugten Werkstücken der Fall ist.

### Bezugszeichenliste

- 1: Schaft
- 2: Kopf
- 3: glatte Schneide
- 4: Schneide mit unterbrochener Schneidenkontur
- 5: Rotationsachse
- 6: Hals
- 7: vorstehender Schneidenbereich
- 8: rückversetzter Schneidenbereich
- 9: Hüllkurve
- 10: Spanraum
- 11: Querschneide

## Patentansprüche

1. Rosenbohrer mit einem Schaft (1) und einem mit diesem verbundenen, mit Schneiden versehenen Kopf (2), **dadurch gekennzeichnet, dass** um den Umfang des Kopfes (2) glatte Schneiden (3) und Schneiden (4) mit einer unterbrochenen Schneidenkontur ausgebildet sind und dass die Schneiden (4) mit der unterbrochenen Schneidenkontur in Form eines Wellenschliffs ausgebildet sind.

2. Rosenbohrer nach Anspruch 1, **dadurch gekennzeichnet, dass** am Umfang des Kopfes (2) alternierend Gruppen von glatten Schneiden (3) und Gruppen von Schneiden (4) mit einer unterbrochenen Schneidenkontur angeordnet sind.

3. Rosenbohrer nach einem der Ansprüche 1 oder 2, **dadurch gekennzeichnet, dass** die glatten Schneiden (3) und die Schneiden (4) mit einer unterbrochenen Schneidenkontur in zu einer Rotationsachse des Kopfes (2) rechtwinkligen Ebenen unterschiedliche Radien aufweisen.

4. Rosenbohrer nach einem der Ansprüche 1 bis 2, **dadurch gekennzeichnet, dass** die glatten Schneiden (3) und die Schneiden (4) mit einer unterbrochenen Schneidenkontur in zu einer Rotationsachse des Kopfes (2) rechtwinkligen Ebenen gleiche Radien aufweisen.

5. Rosenbohrer nach einem der Ansprüche 1 bis 4, **dadurch gekennzeichnet, dass** die Schneiden (4) mit einer unterbrochenen Schneidenkontur über ihre axiale Länge gleich oder unterschiedlich ausgebildet sind.

6. Rosenbohrer nach einem der Ansprüche 1 bis 5, **dadurch gekennzeichnet, dass** das Instrument mittels eines additiven Herstellverfahrens hergestellt ist.

## Claims

1. A rosehead bur having a shaft (1) and, connected to the latter, a head (2) which is provided with cutting edges, **characterized in that** smooth cutting edges (3), and cutting edges (4) with a discontinuous cutting edge contour, are formed about the circumference of the head (2) and **in that** the cutting edges (4) with the discontinuous cutting edge contour are in the form of a serrated finish.

2. The rosehead bur as claimed in claim 1, **characterized in that** groups of smooth cutting edges (3) and groups of cutting edges (4) with a discontinuous cutting edge contour are arranged alternately on the circumference of the head (2).

3. The rosehead bur as claimed in one of claim 1 or 2, **characterized in that** the smooth cutting edges (3) and the cutting edges (4) with a discontinuous cutting edge contour have different radii in planes at right angles to a rotation axis of the head (2).

4. The rosehead bur as claimed in one of claims 1 through 2, **characterized in that** the smooth cutting edges (3) and the cutting edges (4) with a discontinuous cutting edge contour have identical radii in planes at right angles to a rotation axis of the head (2).

5. The rosehead bur as claimed in one of claims 1 through 4, **characterized in that** the cutting edges (4) with a discontinuous cutting edge contour are identical or different along their axial length.

6. The rosehead bur as claimed in one of claims 1 through 5, **characterized in that** the instrument is produced by means of an additive production method.

## Revendications

1. Fraise boule avec une tige (1) et une tête (2) reliée à celle-ci, pourvue de tranchants, **caractérisée en ce que** des tranchants lisses (3) et des tranchants (4) avec un contour de coupe discontinu sont réalisés autour de la périphérie de la tête (2) et que les tranchants (4) avec le contour de coupe discontinu sont réalisés sous la forme d'une lame ondulée.

2. Fraise boule selon la revendication 1, **caractérisée en ce que** des groupes de tranchants lisses (3) et des groupes de tranchants (4) avec un contour de coupe discontinu sont disposés en alternance au niveau de la périphérie de la tête (2).

3. Fraise boule selon l'une quelconque des revendications 1 ou 2, **caractérisée en ce que** les tranchants lisses (3) et les tranchants (4) avec un contour de coupe discontinu présentent des rayons différents dans des plans perpendiculaires à un axe de rotation de la tête (2).

4. Fraise boule selon l'une quelconque des revendications 1 à 2, **caractérisée en ce que** les tranchants lisses (3) et les tranchants (4) avec un contour de coupe discontinu présentent des rayons identiques dans des plans perpendiculaires à un axe de rotation de la tête (2).

5. Fraise boule selon l'une quelconque des revendications 1 à 4, **caractérisée en ce que** les tranchants (4) avec un contour de coupe discontinu sont réalisés de manière identique ou différente sur toute leur longueur axiale.

6. Fraise boule selon l'une quelconque des revendications 1 à 5, **caractérisée en ce que** l'instrument est fabriqué au moyen d'un procédé de fabrication additive.
